(19)

Europäisches
Patentamt
European
Patent Office
Office européen
des brevets

(11) **EP 4 318 673 A1**

(12) **EUROPEAN PATENT APPLICATION**
published in accordance with Art. 153(4) EPC

(43) Date of publication:
07.02.2024 Bulletin 2024/06

(51) International Patent Classification (IPC):
**H01M 4/583** (2010.01)     **C01B 32/205** (2017.01)

(21) Application number: 21934306.8

(52) Cooperative Patent Classification (CPC):
Y02E 60/10

(22) Date of filing: 06.07.2021

(86) International application number:
PCT/CN2021/104653

(87) International publication number:
WO 2022/205658 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Ningde Amperex Technology Limited**
**Ningde, Fujian 352100 (CN)**

(72) Inventors:
• **JIN, Wenbo**
  **Ningde, Fujian 352100 (CN)**
• **DONG, Jiali**
  **Ningde, Fujian 352100 (CN)**

(30) Priority: 30.03.2021 CN 202110340794

(74) Representative: **Icosa**
**83 avenue Denfert-Rochereau**
**75014 Paris (FR)**

(54) **NEGATIVE ELECTRODE MATERIAL AND ELECTROCHEMICAL APPARATUS CONTAINING SAME, AND ELECTRONIC DEVICE**

(57)     A negative electrode material. The negative electrode material includes a carbonaceous active material. Observed in a 80 $\mu$m$\times$100 $\mu$m region of an SEM image, the carbonaceous active material includes carbonaceous particles with pores. The negative electrode material satisfies the following condition (A) or (B): (A) the pore has a maximum diameter Y, a range of the maximum diameter Y of the pores in a single carbonaceous particle satisfies 0.3 $\mu$m$\leq$Y$\leq$2.0 $\mu$m, and an average value X of the maximum diameter of the pores in the carbonaceous particle satisfies 0.6 $\mu$m$\leq$X$\leq$1.5 $\mu$m; and (B) a proportion of a quantity of the carbonaceous particles with a quantity of the pores N$\leq$2 in a total quantity of the carbonaceous particles in the region is $\leq$60%, and a pro- portion of a quantity of the carbonaceous particles with a quantity of the pores 3$\leq$N$\leq$5 in the total quantity of car- bonaceous particles in the region is $\leq$30%. Further pro- vided is an electrochemical apparatus including the neg- ative electrode material.

Figure 1

## Description

This application claims priority to Chinese Patent Application No. 202110340794.6, filed with the China National Intellectual Property Administration on March 30, 2021 and entitled "NEGATIVE ELECTRODE MATERIAL, AND ELECTROCHEMICAL APPARATUS AND ELECTRONIC DEVICE INCLUDING SAME", which is incorporated herein by reference in its entirety.

## TECHNICAL FIELD

This application relates to the field of energy storage technologies, and in particular, to a negative electrode material, and an electrochemical apparatus and an electronic device including such negative electrode material.

## BACKGROUND

With the continuous expansion of the electrochemical apparatus market, for example, the lithium-ion battery market, higher performance requirements have been raised constantly for batteries. For example, batteries are required to be not only lightweight but also to have good low-temperature charge and discharge performance. For example, with extensive application, electric vehicles or electric tools are used in diverse conditions, inevitably including low temperature conditions. Therefore, it is required that batteries used therein have good low-temperature discharge performance and are charged at a high rate at low temperatures without lithium precipitation. These allow lithium-ion batteries to operate more efficiently under low-temperature conditions. To address the market needs, a negative electrode material with excellent kinetic performance needs to be developed, so as to improve the operating capability of the lithium-ion batteries under low-temperature conditions.

Typically, the kinetic performance of a negative electrode material is improved using a method of reducing the particle size of graphite to shorten the lithium intercalating path of lithium ions or directly coating the negative electrode material. However, the two methods require high costs and reduce the energy density of the negative electrode material, including the compacted density, gram capacity, and the like.

## SUMMARY

Some embodiments of this application provide a negative electrode material, which solves at least one problem existing in the related art to at least some extent. Some embodiments of this application further provide an electrochemical apparatus and an electronic device using such negative electrode material. Featuring high discharge rate performance and charging capability at low temperatures, the negative electrode material provided in some embodiments of this application can improve the low-temperature operation performance of the electrochemical apparatus.

According to a first aspect of this application, this application provides a negative electrode material. Observed in a 80 $\mu$m$\times$100 $\mu$m region of an SEM image, which can be selected through observation under the SEM image, the carbonaceous active material includes carbonaceous particles with pores. The negative electrode material satisfies the following condition. A pore has a maximum diameter Y. The pore satisfies the following condition (A) or (B): (A) a range of the maximum diameter Y of the pores in a single carbonaceous particle satisfies 0.3 $\mu$m$\leq$Y$\leq$2.0 $\mu$m, and an average value X of the maximum diameter of the pores in the carbonaceous particles satisfies 0.6 $\mu$m$\leq$X$\leq$1.5 $\mu$m; or (B) a proportion of a quantity of the carbonaceous particles with a quantity of the pores N$\leq$2 in a total quantity of the carbonaceous particles in the region is $\leq$60%, and a proportion of a quantity of the carbonaceous particles with a quantity of the pores 3$\leq$N$\leq$5 in the total quantity of the carbonaceous particles in the region is $\leq$30%.

In this solution, pores in the carbonaceous particle satisfy the condition (A) or (B). When the condition (A) is satisfied, the pores in the particle have a large size; when the condition (B) is satisfied, the particle has a large quantity of pores. When the particle satisfies the condition (A) or (B), the negative electrode material can significantly improve the rate performance and low-temperature charge and discharge performance of the electrochemical apparatus, effectively alleviate lithium precipitation at low temperatures, and improve the electrolyte infiltration of a negative electrode plate.

In some embodiments of this application, a relationship between a median particle size $D_v50$ of the carbonaceous particles with pores and Y satisfies $D_v50 \geq 5Y$, where a unit of $D_v50$ is $\mu$m.

In this solution, a proportion of the pores in the entire particle in size is restricted within an appropriate range. This can reduce or avoid the formation of a large cavity inside the particle due to an extremely large pore relative to the particle, lowering the probability of cracking the particle during cold pressing due to excessively high mechanical strength.

In some embodiments of this application, a relationship between the maximum diameter Y and the average value X of the maximum diameter of the pores satisfies Y-X$\leq$1.0 $\mu$m. In some embodiments of this application, in a single carbonaceous particle with pores, a distance L between two adjacent pores is L$\leq$8.0 $\mu$m.

In this solution, a difference between pore diameters in the carbonaceous particle is within the foregoing range. This can ensure good consistency in pore size, facilitating deintercalation of lithium ions. In addition, the distance between two adjacent pores is within the foregoing range. This can ensure uniform distribution of pores in the carbonaceous particle, improve the infiltration of the electrode plate, and improve the kinetic performance of the negative electrode material.

In some embodiments of this application, the pores include at least one of a through hole or a blind hole.

In some embodiments of this application, the carbonaceous active material has a compacted density of CD in a unit of $g/cm^3$ after being pressed under a pressure of 5T, where $CD \leq 1.85$. A low powder compacted density indicates that the porous structure of porous graphite is less likely to be damaged and can still be prevented from being crushed after being pressed under a great pressure. In some embodiments of this application, the carbonaceous active material has a gram capacity of Cap in a unit of mAh/g, where $Cap \geq 340$, and a value of Cap and a compacted density CD in a unit of $g/cm^3$ after being pressed under a pressure of 5T of the carbonaceous active material satisfy $Cap \leq 350 - 50 \times (1.90 - CD)$. This can ensure a balance between the gram capacity and the compacted density of a porous material, thereby achieving a higher battery energy density. In some embodiments of this application, a particle size distribution of the carbonaceous active material satisfies $D_v 99 \leq 3.5 \times D_v 50$. This can ensure proper particle size and narrow particle distribution of the porous material, so as to prevent negative electrode plate processing from being affected by too many large particles.

In this solution, parameters of the carbonaceous active material are within the foregoing ranges. This helps improve the kinetic performance of the material and low-temperature charge and discharge performance of the battery while ensuring the energy density of the battery.

In some embodiments of this application, a degree of graphitization G of the carbonaceous active material is 90% to 95.5%. A lower degree of graphitization can ensure a large spacing between graphite layers in the porous material, facilitating rapid deintercalation of lithium ions and improving the kinetic performance. To ensure the energy density of the battery, the degree of graphitization should not be too low. In some embodiments of this application, a specific surface area BET of the carbonaceous active material satisfies $BET \leq 3.0 \ m^2/g$. Due to existence of the porous structure, the specific surface area of a porous material is typically large. However, an excessively large specific surface area will affect the storage and cycling performance of the battery. A larger specific surface area means more violent reaction between the active material and the electrolyte, affecting the storage and cycling performance of the battery. Therefore, the specific surface area BET of an active material needs to be controlled at a low level. In some embodiments of this application, the carbonaceous active material includes at least one of artificial graphite, natural graphite, or meso-carbon microbeads.

In this solution, both the kinetic performance and energy density of the material can be ensured when the degree of graphitization is within an appropriate range, ensuring the performance of the battery. In addition, electrochemical properties such as storage of an electrochemical apparatus can be ensured when the specific surface area BET of the carbonaceous active material is within this range.

According to a second aspect of this application, an electrochemical apparatus is provided, including a negative electrode. The negative electrode includes a negative electrode current collector and a negative electrode active material layer disposed on at least one surface of the negative electrode current collector, and the negative electrode active material layer includes the foregoing negative electrode material.

The electrochemical apparatus further includes a positive electrode, a separator provided between the positive electrode and the negative electrode, and an electrolyte. The electrolyte contains fluoroethylene carbonate and 1,3-propane sultone.

In some embodiments of this application, a compacted density PD in a unit of $g/cm^3$ of the negative electrode satisfies $1.45 \leq PD \leq 1.75$. A porous material used as the negative electrode should not have an excessively high compacted density; otherwise, a porous structure of the material will be damaged. In addition, a high compacted density will degrade the charging capability of a battery, while an excessively low compacted density for the porous material used as the negative electrode will cause the active material to drop off from the electrode plate, affecting the battery stability. Therefore, the compacted density needs to be restricted within a specified range. In some embodiments of this application, a porosity $\Phi$ of the negative electrode satisfies $\Phi \geq 20\%$. The porous material itself has many porous structures. A negative electrode plate made of the porous material has a high porosity and abundant porous structures, thereby featuring good electrolyte infiltration and providing good kinetic performance for the battery.

In this solution, an electrochemical apparatus with such negative electrode has excellent discharge performance and charging capability at low temperatures.

In some embodiments of this application, a capacity retention rate is reduced by less than or equal to 20% after 500 cycles at 25°C. Fluoroethylene carbonate and 1,3-propane sultone in the electrolyte interact with the negative electrode material, effectively improving the interface of contact and thereby improving the cycling.

According to a third aspect of this application, an electronic device is provided, including the electrochemical apparatus according to the foregoing embodiments of this application.

The negative electrode material provided in some embodiments of this application includes carbonaceous particles with pores. The pore has a large size and is provided in a large quantity, significantly increasing the area of contact between the negative electrode material and the electrolyte. This improves the kinetic performance of the negative electrode material, thereby improving the discharge rate performance and charging capability of the negative electrode material at low temperatures. In conclusion, the negative electrode material of this application can be used in an electrochemical apparatus to effectively improve the low-temperature charge and discharge performance of the electrochemical apparatus operating under low-temperature conditions. Additional aspects and advantages of some embodiments of this application are partly described and presented in subsequent descriptions, or explained by implementation of some embodiments of this application.

## BRIEF DESCRIPTION OF DRAWINGS

To describe some embodiments of this application, the following briefly describes the accompanying drawings required for describing these embodiments of this application or the prior art. Apparently, the accompanying drawings described below are merely some embodiments of this application. Persons skilled in the art may still derive drawings for other embodiments from structures shown in these accompanying drawings.

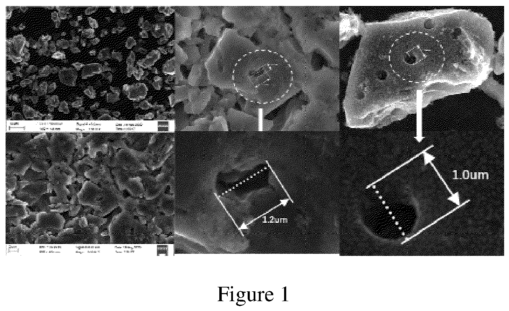

Figure. 1 shows a scanning electron microscope (SEM) image of a negative electrode material according to an illustrative embodiment of this application.

## DETAILED DESCRIPTION

Some embodiments of this application are described in detail below. Some embodiments of this application shall not be construed as limitations on this application.

The terms "roughly", "approximately", or "substantially" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to $\pm 10\%$ of the value, for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may contain a single element or a plurality of elements. The item B may contain a single element or a plurality of elements. The item C may contain a single element or a plurality of elements. In the specific embodiments and claims, if item A or B is listed, meaning only A, only B, or both A and B.

As used herein, "$D_v99$" refers to a particle size of a material that reaches 99% of a cumulative volume from a small particle size side in a volume-based particle size distribution. That is, a volume of the material with a particle size less than this particle size accounts for 99% of a total volume of the material.

As used herein, "$D_v50$", also known as "median particle size", refers to a particle size of a material that reaches 50% of a cumulative volume from a small particle size side in a volume-based particle size distribution. That is, a volume of the material with a particle size less than this particle size accounts for 50% of a total volume of the material.

For a negative electrode material, $D_v50$ and $D_v99$ of the material may be measured using a method known in the art, for example, using a laser particle size analyzer (for example, a Malvern particle size tester).

For a negative electrode material, the maximum diameter Y of a pore, an average value X of the maximum diameter of the pores, and a quantity of the pores may be measured or calculated using a method known in the art. For example, a scanning electron microscope (SEM) inspection is performed on a sample, and the lengths and quantity of pores in the sample are visually measured or obtained through calculation based on the obtained SEM pattern. For example, in an embodiment of this application, at least 30 particles are present in an SEM region ($80\ \mu m \times 100\ \mu m$). It can be known that: some of the at least 30 particles have pores, at least one particle among the particles with a pore contains at least one pore, and the maximum diameter Y satisfies $0.3\ \mu m \leq Y \leq 2.0\ \mu m$. An average value of the maximum diameter Y of pores in the carbonaceous particles with pores is calculated, which is the average value X of the maximum diameter Y of the pores in the carbonaceous particles. To be specific, the average value X of the maximum diameter Y of the pores in these particles with pores satisfies 0.6 $\mu$m≤X≤1.5 $\mu$m.

I. Negative electrode material

In some embodiments, this application provides a negative electrode material. The negative electrode material includes a carbonaceous active material. The carbonaceous active material is present in a region (a size of this region may be, for example, 80 $\mu$m×100 $\mu$m), and includes carbonaceous particles with pores.

A pore has a maximum diameter Y. The pores satisfy the following:

(A) a range of the maximum diameter Y of pores in a single carbonaceous particle satisfies 0.3 $\mu$m≤Y≤2.0 $\mu$m, and an average value X of the maximum diameter of the pores in the carbonaceous particle satisfies 0.6 $\mu$m≤X≤1.5 $\mu$m; and (B) a proportion of a quantity of the carbonaceous particles with a quantity of pores N≤2 in a total quantity of the carbonaceous particles in the region is ≤60%, and a proportion of a quantity of the carbonaceous particles with a quantity of pores 3≤N≤5 in a total quantity of the carbonaceous particles in the region is ≤30%.

According to some embodiments of this application, pores in the carbonaceous particle satisfy the condition (A) or (B). When the condition (A) is satisfied, the pores in the particle have a large size; when the condition (B) is satisfied, the particle has a large quantity of pores. When characteristics of the particle satisfy the condition (A) or (B), the negative electrode material can significantly improve the rate performance and low-temperature charge and discharge performance of the electrochemical apparatus, effectively alleviate lithium precipitation at low temperatures, and improve the electrolyte infiltration of a negative electrode plate.

It can be understood that a carbonaceous particle has at least one pore, the at least one pore having the maximum diameter Y in a direction with a maximum length (which is a diameter of the maximum circumscribed circle). X represents the average value of maximum diameter of multiple pores in the particle. Sizes of the pores need to satisfy the ranges for Y and X specified as above. The pore may be measured in micrometers or sub-micrometers. A cross section of the pore may be in any shape, for example, any regular or irregular shape, which is not specifically limited. In other words, the maximum diameter of the pore is limited, but the pore may not be in the shape of a circle. Regarding different shapes for the cross sections of pores, Y may be expressed differently. For example, if the cross section of a pore is in the shape of a circle, Y may represent diameter of the pore, namely, pore size; if the cross section of a pore is in the shape of a rectangle, Y may represent length of the diagonal of the rectangle. However, it should be noted that a thin slot cannot be regarded as a pore described in some embodiments of this application.

Figure. 1 shows a scanning electron microscope (SEM) image of a negative electrode material according to some embodiments of this application. As shown in Figure. 1, the carbonaceous active material in some embodiments of this application includes carbonaceous particles with pores. The particle has a porous structure, and the pores have a large size and are distributed uniformly. The pores can satisfy the foregoing condition (A) or (B). Therefore, the negative electrode material having the carbonaceous particles with pores is of a porous structure that features large pore diameter and large pore quantity. As a result, the area of contact between the active material and the electrolyte is greatly increased. In addition, due to existence of pores, more lithium intercalation passages are provided for metal ions such as lithium ions and the lithium intercalation path is shortened. This facilitates rapid deintercalation of lithium ions and improves the kinetic performance of the negative electrode material, thereby improving the discharge rate performance and charging capability at low temperatures.

In some embodiments, 0.5 $\mu$m≤Y≤1.5 $\mu$m and 0.8 $\mu$m≤X≤1.2 $\mu$m. In some embodiments, Y may be approximately 0.3 $\mu$m, 0.4 $\mu$m, 0.5 $\mu$m, 0.6 $\mu$m, 0.7 $\mu$m, 0.8 $\mu$m, 0.9 $\mu$m, 1.0 $\mu$m, 1.3 $\mu$m, 1.5 $\mu$m, 1.6 $\mu$m, 1.7 $\mu$m, 1.9 $\mu$m, or 2.0 $\mu$m, or within a range defined by any two of these values. In some embodiments, X may be approximately 0.6 $\mu$m, 0.7 $\mu$m, 0.8 $\mu$m, 0.9 $\mu$m, 1.0 $\mu$m, 1.1 $\mu$m, 1.2 $\mu$m, 1.3 $\mu$m, 1.4 $\mu$m, or 1.5 $\mu$m, or within a range defined by any two of these values.

In some embodiments, a proportion of a quantity of the carbonaceous particles with a quantity of the pores N≤2 in a total quantity of the carbonaceous particles in the region is 5% to 60%, and a proportion of a quantity of the carbonaceous particles with a quantity of the pores 3≤N≤5 in the total quantity of the carbonaceous particles is 2% to 30%. In some embodiments, a proportion of a quantity of the carbonaceous particles with a quantity of the pores N≤2 in a total quantity of the carbonaceous particles in the region is 10% to 60%, and a proportion of a quantity of the carbonaceous particles with a quantity of the pores 3≤N≤5 in the total quantity of the carbonaceous particles is 5% to 30%. In some embodiments, the proportion of a quantity of the carbonaceous particles with a quantity of the pores N≤2 in a total quantity of the carbonaceous particles in the region is approximately 10%, 15%, 20%, 25%, 30%, 35%, 40%, 45%, 50%, 55%, or 60%, or within a range defined by any two of these values. The proportion of a quantity of the carbonaceous particles with a quantity of the pores 3≤N≤5 in the total quantity of the carbonaceous particles in the region is approximately 5%, 8%, 10%, 15%, 18%, 20%, 22%, 25%, 28%, or 30%, or within a range defined by any two of these values.

In some embodiments of this application, a relationship between a median particle size $D_v50$ of the carbonaceous

particle with pores and Y satisfies $D_v50 \geq 5Y$. In some embodiments of this application, a relationship between a median particle size $D_v50$ of the carbonaceous particle with pores and Y satisfies $D_v50 > 5Y$. In some embodiments of this application, a relationship between a median particle size $D_v50$ of the carbonaceous particle with pores and Y satisfies $10Y > D_v50 > 5Y$.

According to some embodiments of this application, it is restricted that $D_v50$ of the particle satisfies $D_v50 \geq 5Y$, so as to ensure that the negative electrode material has certain mechanical strength and the particle can be prevented from being cracked during cold pressing of the electrode plate. In this case, a proportion of the pores in the entire particle in size is restricted within an appropriate range. This can reduce or avoid the formation of a large cavity inside the particle due to an extremely large pore relative to the particle, lowering the probability of cracking the particle during cold pressing due to excessively high mechanical strength.

In some embodiments of this application, the carbonaceous particle with pores satisfies: (a) a relationship between the maximum diameter Y and the average value X of the maximum diameter of the pores satisfies $Y-X \leq 1.0$ $\mu m$; (b) in a single carbonaceous particle with pores, a distance L between two adjacent pores is $L \leq 8.0$ $\mu m$.

According to some embodiments of this application, to ensure pore size uniformity of the negative electrode material, when a single carbonaceous particle has two or more pores, it is restricted that a difference between the maximum diameter Y and the average value X of the maximum diameter satisfies $Y-X \leq 1.0$ $\mu m$. As a result, when a single carbonaceous particle has multiple pores, these pores are consistent in size, which facilitates deintercalation of lithium ions.

In some embodiments, when the single porous carbonaceous particle has pores with a quantity of the pores $N \geq 2$, a distance L between two adjacent pores is $L \leq 8.0$ $\mu m$. In some embodiments, when the single porous carbonaceous particle has pores with a quantity of the pores $N \geq 2$, a distance L between two adjacent pores is $0.1$ $\mu m < L \leq 8.0$ $\mu m$. In some embodiments, L may be approximately 8.0 $\mu m$, 7.5 $\mu m$, 7.0 $\mu m$, 6.6 $\mu m$, 6.2 $\mu m$, 6.0 $\mu m$, 5.0 $\mu m$, 4.0 $\mu m$, 3.0 $\mu m$, 2.5 $\mu m$, 2.0 $\mu m$, or the like.

According to some embodiments of this application, to ensure uniform distribution of pores in particles of the negative electrode material, it is restricted that when a particle of the negative electrode material has two or more pores, a distance L between two adjacent pores is $L \leq 8.0$ $\mu m$. This can ensure uniform distribution of the pores in the particle, improve the infiltration of the electrode plate, and improve the kinetic performance of the negative electrode material.

In some embodiments of this application, a pore includes at least one of a through hole or a blind hole. That is, in some embodiments, a pore may be in the form of a through hole; or in some other embodiments, a pore may be in the form of a blind hole; or in some other embodiments, a pore may be in the form of both a through hole and a blind hole.

In some embodiments, a particle size distribution of the carbonaceous active material satisfies $D_v99 \leq 3.5 \times D_v50$. In some embodiments, a particle size distribution of the carbonaceous active material satisfies $D_v99 \leq 3.5 \times D_v50$. According to some embodiments of this application, proper particle size and narrow particle distribution are ensured for the negative electrode material, so as to prevent negative electrode plate processing from being affected by too many large particles. Furthermore, an excessively large particle size will increase the deintercalating path of lithium ions, degrading the kinetic performance of the material, while an excessively small particle size will affect electrode plate compaction and degrade the storage performance. Therefore, when the particle size distribution of the active material satisfies $D_v99 \leq 3.5 \times D_v50$, the kinetic performance of the material can be improved, helping improve the low-temperature charge and discharge performance of the electrochemical apparatus.

In some embodiments, the carbonaceous active material has a compacted density of CD in a unit of g/cm³ after being pressed under a pressure of 5T, where $CD \leq 1.85$. In some embodiments, the carbonaceous active material has a compacted density of CD in a unit of g/cm³ after being pressed under a pressure of 5T, where $CD \leq 1.84$. In some embodiments, the carbonaceous active material has a compacted density of CD in a unit of g/cm³ after being pressed under a pressure of 5T, where CD is approximately 1.85, 1.84, 1.82, 1.80, 1.79, 1.78, 1.76, 1.75, or the like. To ensure the energy density of a battery, the powder compacted density of the active material is restricted. The compacted density of the active material is positively correlated with the compacted density of the negative electrode plate. Therefore, an appropriate powder compacted density for the active material helps increase the energy density of the battery.

In some embodiments, the carbonaceous active material has a gram capacity of Cap in a unit of mAh/g, where $Cap \geq 340$, and a value of Cap and a compacted density CD in a unit of g/cm³ after being pressed under a pressure of 5T of the carbonaceous active material satisfy $Cap \leq 350-50 \times (1.90-CD)$. In some embodiments, the carbonaceous active material has a gram capacity of Cap in a unit of mAh/g, where $Cap \geq 340$, and the value of Cap and the compacted density CD in a unit of g/cm³ after being pressed under a pressure of 5T of the carbonaceous active material satisfy $Cap \leq 350-50 \times (1.85-CD)$. In some embodiments, the gram capacity of the carbonaceous active material is approximately 340 mAh/g, 341 mAh/g, 342 mAh/g, 343 mAh/g, 344 mAh/g, 345 mAh/g, 346 mAh/g, 347 mAh/g, 348 mAh/g, 349 mAh/g, 350 mAh/g, or the like.

According to some embodiments of this application, to ensure the energy density of the battery, it is restricted that the carbonaceous active material has a gram capacity Cap in a unit of mAh/g, where $Cap \geq 340$. Furthermore, it is restricted that the active material satisfies $Cap \leq 350-50 \times (1.90-CD)$. This can ensure a balance between the gram capacity and the compacted density of the material, and allows the material to have a high compacted density while providing a high capacity, thereby achieving a higher battery energy density. As a result, the energy density of the battery is ensured while the low-temperature charge and discharge performance of the battery is improved.

In some embodiments, a degree of graphitization G of the carbonaceous active material is 90% to 95.5%. In some embodiments, a degree of graphitization G of the carbonaceous active material is 90.5% to 94.0%. In some embodiments, the degree of graphitization G of the carbonaceous active material is approximately 90%, 90.5%, 90.8%, 91%, 91.5%, 92%, 92.1%, 92.5%, 93.0%, 93.5%, 94.0%, 94.5%, 95.0%, 95.2%, or 95.5%, or within a range defined by any two of these values. The degree of graphitization is an important parameter affecting the gram capacity of graphite and is also a key parameter affecting the kinetic performance of the material. A low degree of graphitization features a large spacing between graphite layers, facilitating the rapid deintercalation of lithium ions and providing good kinetic performance. However, a low degree of graphitization results in low gram capacity of graphite and low compacted density, affecting the energy density of the battery. Therefore, in some embodiments of the present invention, the degree of graphitization G of the active material satisfies 90%≤G≤95.5%. The kinetic performance and energy density can be ensured when the degree of graphitization is within this appropriate range, ensuring the battery performance.

In some embodiments, a specific surface area BET of the carbonaceous active material satisfies BET≤3.0 $m^2/g$. In some embodiments, a specific surface area BET of the carbonaceous active material satisfies BET≤2.5 $m^2/g$. In some embodiments, the specific surface area BET of the carbonaceous active material is approximately 3.0 $m^2/g$, 2.7 $m^2/g$, 2.5 $m^2/g$, 2.3 $m^2/g$, 2.0 $m^2/g$, 1.9 $m^2/g$, 1.6 $m^2/g$, 1.5 $m^2/g$, 1.3 $m^2/g$, 1.0 $m^2/g$, 0.8 $m^2/g$, or the like. The specific surface area BET of the material may be measured using a method known in the art. For example, a specific surface area analyzer (for example, a TriStar II specific surface area analyzer) is used for measurement.

According to some embodiments of this application, it is restricted that the specific surface area BET of the active material satisfies BET≤3.0 $m^2/g$, so as to ensure the electrochemical properties such as storage of the electrochemical apparatus. The specific surface area of the active material affects the storage performance of the battery. When the specific surface area is larger, reaction between the active material and the electrolyte is more violent, and gas is easily produced during high-temperature storage, degrading the battery performance. Therefore, the specific surface area BET of the active material is restricted within the foregoing appropriate range.

Unless otherwise specified, various parameters in this specification have general meanings known in the art, and may be measured using a method known in the art. Details are not described herein.

In some embodiments, the carbonaceous active material includes at least one of artificial graphite, natural graphite, or meso-carbon microbeads. In some embodiments, the carbonaceous active material may include graphite. In this case, use of such carbonaceous active material can improve the discharge rate performance and charging capability at low temperatures.

According to some embodiments of this application, the carbonaceous particle with pores may be obtained using the following method. Some petroleum coke or needle coke with a relatively high volatile matter content is selected as a raw material. During conversion into graphite through special heat treatment, volatile matters are driven off as gas, forming pore structures in particles, and finally porous carbonaceous active particles are obtained. Petroleum coke is used as an example herein. Usually, petroleum coke with a high volatile matter content is not used as a precursor petroleum coke for graphite preparation because it is difficult to directly perform heat treatment on such petroleum coke, which tends to damage the heating equipment and cause a fire risk. Instead, heat treatment is performed first at a low temperature to remove part of volatile matters, and then graphitization is performed through heat treatment. However, this method makes it difficult for graphite particles to have porous structures. When this method is used, the particles are relatively regular and dense, and micropores of nanometers may be present at most if any. This does not improve the kinetic performance of the material, and a battery using such graphite particles as a negative electrode material has a poor charging capability at low temperatures. According to some embodiments of this application, petroleum coke with a high volatile matter content (the volatile matter content needs to be above 11%) is selected as the raw material, and porous structures in micrometers can be obtained by performing special heat treatment directly on such petroleum coke. Petroleum coke with a high volatile matter content contains many hydrocarbon compounds, which will decompose and overflow during the heating process of the petroleum coke. However, a conventional slow heating method will cause the hydrocarbon compounds to slowly decompose and overflow. Swelling of particles when heated and micropores in the particles allow gases to escape slowly, and therefore large pores in microns will not be formed. In this embodiment of this application, a rapid heating method is used. During the rapid heating process, hydrocarbon compounds are violently decomposed into gases and overflow. A large amount of gas is produced in a short time, and can hardly be discharged through such micropores. In this case, the micropores are changed to pores of micrometers by the expansion force of the gases. In addition, large pores are formed through accumulation in the particles and a certain outward tension is generated, so as to form a large porous structure. During the cooling process, the pores will not collapse along with cooling shrinkage due to that outward tension. In order to achieve the aforementioned effects, the particle size of the pulverized raw coke should not be too small. If the particle size is too small, the specific surface area is excessively large, and gas does not accumulate but tends to overflow from small particles. In this case, micropores are not expanded and pores of micrometers cannot be produced. Therefore, in some embodiments of this application, the pulverized petroleum coke is required to have a large size, and the particle size $D_v50$ of the pulverized raw coke should be above 8 $\mu$m. To ensure the kinetic performance and processability of the material, the particle size should not be too large and the particle size $D_v50$ of the raw coke particles should be restricted below 20 $\mu$m. During rapid heating, a large amount of gas is produced, which may affect the equipment and cause safety risk. In some embodiments of this application, exhaust holes or active exhaust devices may be provided to effectively ensure smooth discharge of gas, so that equipment will not be damaged or fires due to the accumulation of flammable gases will not be caused. In the early first stage, heating is performed at a heating speed of above 30°C/min (higher than a conventional heating speed for graphitization) to quickly volatilize and decompose the volatile matters of petroleum coke into gases, thereby meeting the foregoing pore formation conditions. After the temperature rises to 1300°C, the heating speed is slowed down to ensure sufficient and even heating during the conversion process of petroleum coke, avoiding deformation and cracking of particles due to uneven heating during graphitization and ensuring a stable and reliable graphitization process. When the temperature rises to about 2850°C, thermal insulation is performed. After about 36 hours of thermal insulation, graphitization is basically completed, and a degree of graphitization of the graphite may reach 90% or above. After cooling, ball milling and shaping treatment is performed on particles to change surface states of the particles, so as to ensure that specific surface areas BET of the particles are within an appropriate range. After ball milling, graphite defects on the surfaces of the particles increase, helping improve the kinetic performance of the graphite material and improving powder compacted density to some extent. Certainly, the preparation method of the carbonaceous particles with pores is not limited thereto, and preparation may also be performed using other methods well known in the art.

In some specific implementations, the carbonaceous particle with pores is prepared using the following method. Petroleum coke or needle coke with a high volatile matter content which needs to be above 11% is selected as the raw material. The raw material is pulverized until the particle size falls within a specified range. The particle size $D_v50$ of the pulverized petroleum coke or needle coke raw material is controlled between 8 $\mu$m and 20 $\mu$m. Heat treatment is performed the pulverized petroleum coke or needle coke raw material alone or together with a certain amount of natural graphite or meso-carbon microbeads. During the heat treatment, rapid heating is performed at a heating speed of $\geq$ 30°C/min to raise the ambient temperature to 1300°C, slow heating is performed at a speed of 10$\pm$3°C/min until the temperature rises to 2850°C, and thermal insulation is performed at 2850$\pm$30°C for 36$\pm$5 hours. After cooling, ball milling and shaping, sieving, and demagnetization are performed to obtain the negative electrode material.

II. Electrochemical apparatus

In some embodiments, this application provides an electrochemical apparatus including a negative electrode, a positive electrode, an electrolyte, and a separator disposed between the positive electrode and the negative electrode.

The electrochemical apparatus of this application may be a lithium-ion battery or any other suitable electrochemical apparatus. Without departing from the content disclosed in this application, the electrochemical apparatus according to some embodiments of this application includes any apparatus in which electrochemical reactions take place. Specific examples of the apparatus include all types of primary batteries, secondary batteries, fuel batteries, solar batteries, or capacitors. Specially, the electrochemical apparatus is a lithium secondary battery. The lithium secondary battery includes but is not limited to a lithium metal secondary battery, a lithium-ion secondary battery, a lithium polymer secondary battery, or a lithium-ion polymer secondary battery. The electrochemical apparatus of this application is an electrochemical apparatus provided with a positive electrode having a positive electrode active material capable of occluding and releasing metal ions, and a negative electrode having a negative electrode active material capable of occluding and releasing metal ions. The electrochemical apparatus includes any of the foregoing negative electrode materials in this application.

The negative electrode material used in the electrochemical apparatus of this application is any of the foregoing negative electrode materials in this application. In addition, the negative electrode material used in the electrochemical apparatus of this application may alternatively include other negative electrode materials without departing from the essence of this application.

Negative electrode

In some embodiments, a negative electrode includes a negative electrode current collector and a negative electrode active material layer disposed on at least one surface of the negative electrode current collector, and the negative electrode active material layer includes the foregoing negative electrode material.

In some embodiments, a compacted density PD in a unit of g/cm$^3$ of the negative electrode satisfies $1.45 \leq PD \leq 1.75$. In some embodiments, a compacted density PD in a unit of g/cm$^3$ of the negative electrode satisfies $1.50 \leq PD \leq 1.68$. In some embodiments, a compacted density PD in a unit of g/cm$^3$ of the negative electrode is approximately 1.45 g/cm$^3$, 1.50 g/cm$^3$, 1.52 g/cm$^3$, 1.56 g/cm$^3$, 1.58 g/cm$^3$, 1.60 g/cm$^3$, 1.62 g/cm$^3$, 1.65 g/cm$^3$, 1.67 g/cm$^3$,

1.68 g/cm$^3$, 1.70 g/cm$^3$, or 1.75 g/cm$^3$, or within a range defined by any two of these values. If the compacted density of the negative electrode is excessively high, the kinetic performance at low temperatures is degraded, affecting the discharge rate. If the compacted density of the negative electrode is excessively low, the active material may drop off from the electrode plate, affecting the battery stability.

In some embodiments, a porosity Φ of the negative electrode satisfies Φ≥20%. In some embodiments, a porosity Φ of the negative electrode satisfies Φ≥22%. In some embodiments, a porosity Φ of the negative electrode satisfies Φ≥25%. Regarding the negative electrode plate, a higher porosity for the negative electrode plate means more abundant pore structures, better electrolyte infiltration, and higher liquid phase conduction velocity of active ions. Therefore, the kinetic performance of the battery is improved when the porosity of the negative electrode plate is higher. However, the negative electrode plate with a higher porosity will adversely affect the energy density of the battery to a great extent. Therefore, the porosity of the negative electrode needs to be within the foregoing appropriate range.

In some embodiments of this application, a capacity retention rate is reduced by less than or equal to 20% after 500 cycles at 25°C. A porous material is conducive to the infiltration and circulation of the electrolyte. The amount of electrolyte decreases with consumption of the electrolyte during cycling. Performance will be affected by the interface when the material is of a dense structure and nonporous, and defects such as purple spots may occur, reducing cycles. With better electrolyte infiltration, the porous material can greatly retard the occurrence of defects such as purple spots, thereby improving cycling and slowing the capacity attenuation of the battery.

In some embodiments, a discharge ratio of the electrochemical apparatus is ≥80% at 0°C, where the discharge rate is 1C, and the discharge ratio at 0°C = (discharge capacity at 0°C/discharge capacity at 25°C)×100%. In some embodiments, the electrochemical apparatus is charged at 0°C at a rate of 0.3C, without lithium precipitation.

According to some embodiments of this application, the electrochemical apparatus has excellent discharge performance and charging capability at low temperatures when using a negative electrode prepared with the negative electrode material according to any one of the foregoing embodiments, where the compacted density of the negative electrode is PD in a unit of g/cm$^3$, where PD is 1.45 to 1.75, and the porosity Φ of the negative electrode satisfies Φ≥20%. A negative electrode disassembled from a fresh battery and a negative electrode disassembled from a cycled battery still satisfy the foregoing ranges of compacted density and porosity, and a negative electrode material removed therefrom still satisfy the negative electrode material characteristics described in any one of the foregoing embodiments. An electrochemical apparatus, for example a lithium-ion battery, formed by such negative electrode, a positive electrode, an electrolyte, and a separator has excellent discharge performance and charging capability at low temperatures, and satisfies that the discharge ratio is ≥80% at 0°C and lithium precipitation does not occur during charging at 0°C at a rate of 0.3C.

In some embodiments, the negative electrode active material layer further includes a binder. The binder may include various binder polymers, such as polyvinyl alcohol, carboxymethyl cellulose, hydroxypropyl cellulose, diacetyl cellulose, polyvinyl chloride, carboxylated polyvinyl chloride, polyvinyl fluoride, ethylene oxide containing polymer, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the negative electrode active material layer further includes a conductive agent to improve electrode conductivity. Any conductive material that causes no chemical change can be used as the conductive material. Examples of the conductive agent include but are not limited to a carbon-based material such as carbon black, acetylene black, Ketjen black, and carbon fiber; a metal-based material such as metal powder or metal fiber including copper, nickel, aluminum, silver; a conductive polymer such as a polyphenylene derivative; or any mixture thereof.

In some embodiments, the negative electrode current collector includes but is not limited to copper foil, nickel foil, stainless steel foil, titanium foil, foamed nickel, foamed copper, a polymer substrate coated with conductive metal, and any combination thereof. In some embodiments, the negative electrode current collector is copper foil.

In some embodiments, the negative electrode adopts a negative electrode structure known in the art that can be used in electrochemical apparatuses.

In some embodiments, a negative electrode preparation method is a method known in the art that can be used for preparing negative electrodes of electrochemical apparatuses. For example, the negative electrode may be obtained using the following method. The active material, the conductive material, and the binder are mixed in a solvent, a thermal thickener may be added as required to prepare an active material composition, and the active material composition is applied on the current collector. In some embodiments, the solvent may include but is not limited to water or N-methylpyrrolidone.

Positive electrode

In some embodiments, a positive electrode includes a positive electrode current collector and a positive electrode active material layer disposed on at least one surface of the positive electrode current collector, and the positive electrode active material layer includes a positive electrode material. A specific type of the positive electrode active material is not specifically limited, and can be selected based on needs.

In some embodiments, the positive electrode active material includes a compound (namely, a lithiated intercalation compound) that reversibly intercalates and deintercalates a lithium ion. In some embodiments, the positive electrode active material may include a lithium transition metal composite oxide. The lithium transition metal composite oxide includes lithium and at least one element selected from cobalt, manganese, and nickel. In some embodiments, the positive electrode active material is selected from at least one of the following: lithium cobalt oxide ($LiCoO_2$), a lithium nickel manganese cobalt ternary material (NCM), lithium manganese oxide ($LiMn_2O_4$), lithium nickel manganese oxide ($LiNi_{0.5}Mn_{1.5}O_4$), and lithium iron phosphate ($LiFePO_4$).

In some embodiments, the positive electrode active material layer further includes a binder, and further optionally includes a conductive material. The binder can enhance binding between particles of the positive electrode active material, and binding between the positive electrode active material and the positive electrode current collector. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

In some embodiments, the positive electrode active material layer includes a conductive material, thereby imparting conductivity to the electrode. The conductive material may include any conductive material that causes no chemical change. Nonlimiting examples of the positive electrode conductive material include a carbon-based material (for example, natural graphite, artificial graphite, carbon black, acetylene black, Ketjen black, and carbon fiber), a metal-based material (for example, metal powder, and metal fiber, including copper, nickel, aluminum, and silver), a conductive polymer (for example, a polyphenylene derivative), and a mixture thereof.

In some embodiments, the positive electrode current collector is metal. For example, the metal includes but is not limited to aluminum foil.

In some embodiments, the positive electrode adopts a positive electrode plate structure known in the art that can be used in electrochemical apparatuses.

In some embodiments, a positive electrode preparation method is a method known in the art that can be used for preparing positive electrodes of electrochemical apparatuses. For example, the positive electrode may be obtained by using the following method. The active material, the conductive material, and the binder are mixed in a solvent to prepare an active material composition, and the active material composition is applied on the current collector. In some embodiments, the solvent may include water, N-methylpyrrolidone, or the like, but is not limited thereto.

Electrolyte

The electrolyte that can be used in some embodiments of this application may be an electrolyte known in the prior art. Electrolytes can be divided into aqueous electrolytes and non-aqueous electrolytes. Compared with the aqueous electrolytes, the non-aqueous electrolytes allow an electrochemical apparatus to operate in a wider voltage window, thereby achieving a higher energy density. In some embodiments, the non-aqueous electrolyte contains an organic solvent, an electrolyte salt, and an additive.

An electrolyte salt that can be used in the electrolyte of some embodiments of this application includes but is not limited to inorganic lithium salts such as $LiClO_4$, $LiAsF_6$, $LiPF_6$, $LiBF_4$, $LiSbF_6$, $LiSO_3F$, and $LiN(FSO_2)_2$; fluorine-containing organic lithium salts, such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonimide lithium, cyclic 1,2-tetrafluoroethane disulfonimide lithium, $LiPF_4(CF_3)_2$, $LiN(CF_3SO_2)(C4F_9SO_2)$, $LiC(CF_3SO_2)_3$, $LiPF_4(CF_3SO_2)_2$, $LiPF_4(C_2F_5)_2$, $LiPF_4(C_2F_5SO_2)_2$, $LiBF_2(CF_3)_2$, $LiBF_2(C_2F_5)_2$, $LiBF_2(CF_3SO_2)_2$, $LiBF_2(C_2F_5SO_2)_2$; lithium salts containing dicarboxylic acid complex, such as bis(oxalato) lithium borate, difluorooxalato lithium borate, tris(oxalato) lithium phosphate, difluorobis (oxalato) lithium phosphate, and tetrafluoro(oxalato) lithium phosphatee. In addition, one of the foregoing electrolyte salts may be used alone, or two or more thereof may be used. For example, in some embodiments, the electrolyte salt includes a combination of $LiPF_6$ and $LiBF_4$. For another example, in some embodiments, the electrolytic salt includes $LiPF_6$.

In some embodiments, a concentration of the electrolyte salt falls within a range of 0.8 mol/L to 3 mol/L, for example, a range of 0.8 mol/L to 2.5 mol/L, a range of 0.8 mol/L to 2 mol/L, a range of 1 mol/L to 2 mol/L, for another example, 1 mol/L, 1.15 mol/L, 1.2 mol/L, 1.5 mol/L, 2 mol/L, or 2.5 mol/L. The additive that can be used in the electrolyte according to an embodiment of this application may be an additive known in the art that can be used to improve the electrochemical performance of batteries. In some embodiments, the additive includes but is not limited to at least one of a polynitrile compound, sulfur-containing additive, fluoroethylene carbonate (FEC), 1,3-propane sultone (PS), or 1,4-butane sultone. The organic solvent that can be used in the electrolyte according to an embodiment of this application may be any organic solvent known in the prior art. In some embodiments, the organic solvent includes but is not limited to a carbonate compound, an ester-based compound, an ether-based compound, a ketone-based compound, an alcohol-based compound, an aprotic solvent, or a combination thereof. An example of the carbonate compound includes but is not limited to a linear carbonate compound, a cyclic carbonate compound, a fluorocarbonate compound, or a combination thereof.

In some embodiments, the organic solvent includes but is not limited to at least one of ethylene carbonate (EC), propylene carbonate (PC), diethyl carbonate (DEC), ethyl methyl carbonate (EMC), dimethyl carbonate (DMC), propylene carbonate, methyl acetate, or ethyl propionate.

A preparation method of the electrolyte in some embodiments of this application is not limited and the electrolyte may be prepared using a method for preparing an conventional electrolyte. In some embodiments, the electrolyte of this application may be prepared by mixing components.

Separator

In some embodiments, a separator is provided between the positive electrode and the negative electrode to prevent a short circuit. A material or shape of the separator is not particularly limited, and may be based on any technology disclosed in the prior art. In some embodiments, the separator includes a polymer or an inorganic material formed by a material stable to the electrolyte of this application.

For example, in some embodiments, the separator includes a substrate layer. The substrate layer is a non-woven fabric, film, or composite film of a porous structure. A material of the substrate layer may be selected from at least one of polyethylene, polypropylene, polyethylene terephthalate, or polyimide. Specifically, the material of the substrate layer may be selected from polypropylene porous membrane, a polyethylene porous membrane, a polypropylene non-woven fabric, a polyethylene non-woven fabric, or a polypropylene-polyethylene-polypropylene porous composite membrane.

III. Application

In some embodiments, this application provides an electronic device including the foregoing electrochemical apparatus.

The negative electrode material according to an embodiment of this application can improve the low-temperature discharge and charge performance of the electrochemical apparatus, adapting the electrochemical apparatus manufactured therewith to electronic devices in various fields, especially the electronic devices required to operate at low temperatures.

Use of the electrochemical apparatus in this application is not particularly limited, and it can be used in any known electronic device in the prior art. The electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, and the like. In addition to the foregoing electronic device, the electrochemical apparatus is also applicable to energy storage power stations, sea transport vehicles, and air transport vehicles. The air transport vehicles include air transport vehicles used in the atmosphere and air transport vehicles used outside the atmosphere.

Taking a lithium-ion battery as an example, this application will be further specifically described with examples and comparative examples, and this application is not limited to these examples if with no deviation from the essence of this application. Reagents, materials, and instruments used in the following examples and comparative examples are all commercially available or synthesized unless otherwise specified.

Examples

The following describes performance evaluation performed based on Examples and Comparative Examples of the lithium-ion battery in this application.

**I. Preparation of a lithium-ion battery**

1. Preparation of negative electrode

A negative electrode material graphite, an additive (a conductive agent), a binder styrene-butadiene rubber (SBR), and a thickener sodium carboxymethyl cellulose (CMC) were well stirred and mixed at a mass ratio of 95.7:1.5:1.8:1 in a solvent deionized water to obtain a uniform negative electrode slurry. The negative electrode slurry was evenly applied on a negative electrode current collector of copper foil, dried, and cold pressed to form a negative electrode active material layer, and then a negative electrode was obtained after cutting and tab welding.

In the following examples and comparative examples, a difference in negative electrode preparation mainly lie in different negative electrode materials used. See the following tables for details.

2. Preparation of positive electrode

A positive electrode active material lithium iron phosphate (LiFePO$_4$), a conductive agent acetylene black, and a binder polyvinylidene fluoride (PVDF) were mixed at a mass ratio of 96.3:2.2:1.5 in a solvent N-methylpyrrolidone (NMP), and well stirred by a vacuum mixer to obtain a positive electrode slurry. The positive electrode slurry was evenly applied on a positive electrode current collector of copper foil, dried, and cold pressed to form a positive electrode active material layer, and then a positive electrode was obtained after cutting and tab welding.

3. Preparation of electrolyte

In a dry argon atmosphere glove box, ethylene carbonate (EC), propylene carbonate (PC), ethyl methyl carbonate (EMC), and diethyl carbonate (DEC) were uniformly mixed at a mass ratio of EC:PC:EMC:DEC=10:30:30:30, 2% fluoroethylene carbonate and 2% 1,3-propane sultone were added, dissolved, and well stirred, and then a lithium salt LiPF$_6$ was added and well mixed to obtain an electrolyte, where the concentration of LiPF$_6$ was 1 mol/L.

4. Preparation of separator

A polyethylene (PE) porous polymer film was used as a separator.

5. Preparation of lithium-ion battery

The obtained positive electrode, separator, and negative electrode were stacked in sequence, allowing the separator to be placed between the positive electrode and the negative electrode for separation purposes, and then were wound to obtain a bare battery. The bare battery was placed in an outer packaging of aluminum foil film, and the electrolyte was injected. A lithium-ion battery was obtained after processes such as vacuum packaging, standing, and formation.

**II. Test method**

(1) Test procedure for low-temperature discharge ratio of the lithium-ion battery was as follows.

(1) A furnace temperature was adjusted to 25°C and the battery was left standing for 5 minutes. (2) The battery was constant-current discharged to 2.5 V at a constant current of 0.5C.
(3) The battery was left standing for 30 minutes. (4) The battery was charged to 3.6 V at a constant current of 0.2C and charged to 0.025C at a constant voltage of 3.6V.
(5) The battery was left standing for 10 minutes. (6) The battery was discharged to 2.5 V at a constant current of 1.0C (reference capacity).
(7) The battery was left standing for 10 minutes. (8) The battery was charged to 3.6 V at a constant current of 0.2C and charged to 0.025C at a constant voltage of 3.6V.
(9) The battery was left standing for 10 minutes. (10) The furnace temperature was adjusted to 0°C and the battery was left standing for 60 minutes.
(11) The battery was discharged to 2.5 V at a constant current of 1.0C. (12) The battery was charged to 3.6 V at a constant current of 0.2C and charged to 0.025C at a constant voltage of 3.6V.
(13) The battery was left standing for 10 minutes. (14) The battery was discharged to 2.5 V at a constant current of 1.0C (discharge capacity at 0°C).
(15) The furnace temperature was adjusted to 25°C and the battery was left standing for 60 minutes. (16) Test was completed.
Discharge ratio of the lithium-ion battery at 0°C = (discharge capacity at 0°C/discharge capacity at 25°C)×100%. The discharge rate is 1C.

2. Test procedure for low-temperature charge performance of the lithium-ion battery was as follows.

(1) The furnace temperature was adjusted to 25°C and left standing for 30 minutes. (2) The battery was discharged to 2.8 V at a constant current of 0.5C.

(3) The battery was left standing for 30 minutes. (4) The furnace temperature was adjusted to 0°C and the battery was left standing for 60 minutes.

(5) The battery was charged to 3.6 V at a constant current of 0.3C and charged to 0.025C at a constant voltage of 3.6V.

(6) The charge-discharge process described in (1) to (5) was repeated for 10 times, the battery was disassembled in a drying room, followed by taking photos to record the state of the negative electrode.

(7) After the battery was disassembled, observation was performed on the negative electrode plate to determine whether lithium precipitation occurred. The degree of lithium precipitation was determined based on the state of the negative electrode disassembled from the fully-charged battery. If the entire negative electrode was golden yellow and an area in gray was less than 2%, it was determined that no lithium precipitation occurred. If a large portion of the negative electrode was golden yellow but some positions could be observed in gray and the area in gray was 2%to 20%, it was determined that lithium precipitation was slight. If part of the negative electrode was in gray but golden yellow color could still be observed at some positions and the area in gray was 20% to 60%, it was determined that lithium precipitation occurred. If a large portion of the negative electrode was in gray and the area in gray was >60%, it was determined that lithium precipitation was serious.

(8) Test was completed.

3. For the compacted density test after being pressed under a pressure of 5T and the test standard for powder compaction, refer to GB/T24533-2009 Graphite Negative Electrode Materials for Lithium-ion Batteries. The specific test method was as follows. 1.0000±0.0500 g of sample was placed in a test mold (CARVER#3619 (13 mm)), and the sample was then put into a test device. The test device was SUNS UTM7305, with a test tonnage of 0.3t, 0.5t, 0.75t, 1.0t, 1.5t, 2.0t, 2.5t, 3.0t, 4.0t, or 5.0t, a pressure rise speed of 10 mm/min, a pressure rise duration of 30s, a pressure relief speed of 30 mm/min, and a pressure relief duration of 10s. The powder compacted density herein was a compacted density measured after being pressed at a pressure of 5T. The formula for calculating the compacted density is as follows: compacted density of the carbonaceous active material after being pressed under a pressure of 5T = mass of the negative electrode material/stress area of the negative electrode material/thickness of the sample.

$$\text{Compacted density of the negative electrode} = \text{mass of the negative}$$

$$\text{electrode active material layer/volume of the negative electrode active material layer.}$$

4. The theory of a scanning electron microscope (SEM) test, hereinafter referred to as SEM test for short, is testing a sample based on images of secondary electronic signals generated by an interaction between a focused electron beam and the sample, and is usually used to test the microscopic morphology of a sample. In this application, the JSM-6360LV scanning electron microscope of JEOL and a matching X-ray energy spectrometer is used to analyze the morphology and structure of the sample. During use, the prepared sample is evenly applied on a conductive tape and stuck to the sample stage for testing under the electron microscope. The specific test procedure was as follows.

(1) The active material was sampled. If in powder form, the active material was evenly applied on a conductive tape directly. If the active material was already applied on copper foil (which may be understood as an negative plate composed of the active material and the copper foil), the composed negative electrode plate was put in a muffle furnace at 400°C and insulated for 40±5 minutes at a high temperature, and taken out after cooled down to the ambient temperature. The active material on the surface of the copper foil was stripped off, gently ground and dispersed, and then applied on the conductive tape for subsequent observation.

(2) Morphology of particles in a selected 80 μm×100 μm region were observed under the SEM test. Based on the range, it also needed to be ensured that more than 30 active particles were present in this region. Only when the two conditions are satisfied, the selected region was considered a valid region.

(3) After a region was selected, structures of the particles in this region could be observed one after another. In this valid region, a quantity of particles, a quantity of particles with pores, and a quantity of pores in a single particle could be counted.

(4) Counts obtained during the test were summarized, and the test was completed.

**III. Test result**

Regarding the 80 $\mu$m$\times$100 $\mu$m region selected using the SEM, Table 1 shows relevant performance parameters of the negative electrode materials obtained in Examples 1 to 16 and Comparative Examples 1 to 3, as well as the performance of corresponding batteries. According to Table 1, in Examples 1 to 16, 0.3 $\mu$m$\leq$Y$\leq$2.0 $\mu$m and 0.6 $\mu$m$\leq$X$\leq$1.5 $\mu$m are satisfied, or a proportion of a quantity of the carbonaceous particles with a quantity of the pores N$\leq$2 in a total quantity of carbonaceous particles (referred to as $N_{\leq2}/N_{Total}$ for short in Table 1) is $\leq$60% and a proportion of a quantity of the carbonaceous particles with a quantity of the pores 3$\leq$N$\leq$5 in the total quantity of the carbonaceous particles (referred to as $N_{3-5}/N_{Total}$ for short in Table 1) is $\leq$30%. The negative electrode materials in Comparative Examples 1 to 3 do not satisfy the foregoing conditions.

**Table 1**

| No. | Y ($\mu$m) | X ($\mu$m) | $N_{\leq2}/N_{total}$ | $N_{3-5}/N_{Total}$ | Discharge ratio at 0°C | Charging capability at 0°C at 0.3C |
|---|---|---|---|---|---|---|
| Example 1 | 0.3 | 0.6 | 10.0% | 5.0% | 81.5% | No lithium precipitation |
| Example 2 | 0.5 | 0.7 | 20.0% | 10.0% | 82.0% | No lithium precipitation |
| No. | Y ($\mu$m) | X ($\mu$m) | $N_{\leq2}/N_{Total}$ | $N_{3-5}/N_{Total}$ | Discharge ratio at 0°C | Charging capability at 0°C at 0.3C |
| Example 3 | 0.7 | 0.9 | 30.0% | 15.0% | 82.3% | No lithium precipitation |
| Example 4 | 0.9 | 0.9 | 40.0% | 18.0% | 82.3% | No lithium precipitation |
| Example 5 | 0.9 | 1.1 | 45.0% | 20.0% | 82.5% | No lithium precipitation |
| Example 6 | 1.3 | 1.2 | 50.0% | 20.0% | 82.8% | No lithium precipitation |
| Example 7 | 1.3 | 1.1 | 50.0% | 20.0% | 82.5% | No lithium precipitation |
| Example 8 | 1.5 | 1.2 | 50.0% | 25.0% | 82.5% | No lithium precipitation |
| Example 9 | 1.7 | 1.4 | 55.0% | 25.0% | 82.3% | No lithium precipitation |
| Example 10 | 2.0 | 1.5 | 60.0% | 30.0% | 82.3% | No lithium precipitation |
| Example 11 | 1.3 | 1.1 | 64.0% | 34.0% | 78.2% | No lithium precipitation |
| Example 12 | 1.5 | 1.2 | 64.0% | 35.0% | 78.7% | No lithium precipitation |
| Example 13 | 1.6 | 1.3 | 65.0% | 36.0% | 78.5% | No lithium precipitation |
| Example 14 | 0.2 | 0.1 | 51.0% | 22.0% | 78.3% | No lithium precipitation |
| Example 15 | 0.2 | 0.2 | 56.0% | 20.0% | 78.1% | No lithium precipitation |
| Example 16 | 0.2 | 0.1 | 58.0% | 18.0% | 78.9% | No lithium precipitation |
| Comparative example 1 | 0.1 | 0.1 | 61.0% | 31.0% | 75.5% | With lithium precipitation |
| Comparative example 2 | 0.2 | 0.1 | 63.0% | 33.0% | 75.3% | With lithium precipitation |
| Comparative example 3 | 0.2 | 0.2 | 64.0% | 33.0% | 75.1% | With lithium precipitation |

It can be seen from Table 1 that when the negative electrode materials in Examples 1 to 16 have porous structures and satisfy 0.3 $\mu$m$\leq$Y$\leq$2.0 $\mu$m and 0.6 $\mu$m$\leq$X$\leq$1.5 $\mu$m or $N_{\leq2}/N_{Total}\leq$60% and $N_{3-5}/N_{Total}\leq$30%, pores are of appropriate size and distributed uniformly. In this case, the batteries have good discharge performance and charging capability at low temperatures. The pore structures in the active material greatly increase the porosity of the negative electrode plate, the area of infiltration contact between particles of the active material and the electrolyte is increased, and the deintercalating path of lithium ions is shortened. As a result, the kinetic performance of the active material is improved, thereby improving the discharge rate performance and charging capability at low temperatures. As shown in Examples 1 to 10, when the active material satisfies 0.3 $\mu$m$\leq$Y$\leq$2.0 $\mu$m and 0.6 $\mu$m$\leq$X$\leq$1.5 $\mu$m, as well as $N_{\leq2}/N_{Total}\leq$60% and $N_{3-5}/N_{Total}\leq$30%, the low-temperature performance of a battery is significantly improved because pores are of appropriate size and distributed uniformly. In this case, both the infiltration performance of the electrolyte in the active material and the mechanical strength of the particles can be ensured, and therefore optimal improvement effects are achieved in low-temperature performance. As shown in Examples 11 to 13, when the active material satisfies 0.3 $\mu m \leq Y \leq 2.0$ $\mu m$ and 0.6 $\mu m \leq X \leq 1.5$ $\mu m$ but does not satisfy $N_{\leq 2}/N_{Total} \leq 60\%$ and $N_{3-5}/N_{Total} \leq 30\%$, the low-temperature performance is improved to some extent. When satisfying 0.3 $\mu m \leq Y \leq 2.0$ $\mu m$ and 0.6 $\mu m \leq X \leq 1.5$ $\mu m$, the active material has pores of a large size, and the electrolyte infiltration of the active material can be improved, thereby improving the low-temperature performance of the battery. When $N_{\leq 2}/N_{Total} \leq 60\%$ and $N_{3-5}/N_{Total} \leq 30\%$ are not satisfied, the quantity of pores is more than expected. In this case, the mechanical strength of the active material decreases and particles of the active material tend to be cracked after cold pressing on the electrode plate. This damages some of porous structures and generates a new graphite interface on which no film is formed. A new film formed will continue to consume electrolyte, impairing the low-temperature of the battery. As shown in Examples 14 to 16, when the active material does not satisfy 0.3 $\mu m \leq Y \leq 2.0$ $\mu m$ and 0.6 $\mu m \leq X \leq 1.5$ $\mu m$ but satisfies $N_{\leq 2}/N_{Total} \leq 60\%$ and $N_{3-5}/N_{Total} \leq 30\%$, the low-temperature performance is also improved to some extent. When 0.3 $\mu m \leq Y \leq 2.0$ $\mu m$ and 0.6 $\mu m \leq X \leq 1.5$ are not satisfied, pore diameters are too small or too large. If the pore diameters are too small, electrolyte infiltration is poor and does not help improve the low-temperature performance. If the pore diameters are too large, the mechanical strength of the active material decreases. Similar to the foregoing description, in this case, particles of the active material tend to be cracked after cold pressing on the electrode plate. This damages some of porous structures and generates a new graphite interface on which no film is formed. A new film formed will continue to consume electrolyte, impairing the low-temperature of the battery. When $N_{\leq 2}/N_{Total} \leq 60\%$ and $N_{3-5}/N_{Total} \leq 30\%$ are satisfied, a limited quantity of pores are provided. These can increase the mechanical strength of the active material and prevent particle cracking during cold pressing, helping improve the low-temperature of the battery. Comparative Examples 1 to 3 show the corresponding battery performance when the negative electrode materials do not satisfy the foregoing conditions (A) and (B). It can be found that the low-temperature performance of the battery is significantly degraded when pore diameters are too small or too large and a particle of the active material has too many pores. This is because pores in the active material are too small to greatly increase the area of contact between the active material and the electrolyte; instead, this increases side reactions between the active material and the electrolyte. As a result, the low-temperature performance of the battery is degraded. When pores are too large in size and quantity, the mechanical strength of the active material decreases. In this case, particles of the active material tend to be cracked after cold pressing on the electrode plate, and porous structures are damaged and a new graphite interface on which no film is formed is generated. A new film formed will continue to consume electrolyte, impairing the low-temperature of the battery. Therefore, the active material can achieve optimal improvement effects in low-temperature performance when pores are of appropriate size and quantity.

Table 2 shows relevant performance parameters of the negative electrode materials obtained in Examples 17 to 24, as well as the performance of corresponding batteries. As shown in Table 2, the battery performance is further improved based on Example 6. To ensure that the active material has certain mechanical strength while having porous structures, a relationship between $D_v50$ and 5Y is defined.

**Table 2**

| No. | Y ($\mu m$) | 5×Y ($\mu m$) | Dv50 ($\mu m$) | Discharg e ratio at 0°C | Charging capability at 0°C at 0.3C |
|---|---|---|---|---|---|
| Example 6 | 1.3 | 6.5 | 7.5 | 82.8% | No lithium precipitation |
| Example 17 | 0.5 | 2.5 | 6.2 | 83.8% | No lithium precipitation |
| Example 18 | 0.8 | 4.0 | 6.5 | 84.1% | No lithium precipitation |
| Example 19 | 1.1 | 5.5 | 8.0 | 84.3% | No lithium precipitation |
| Example 20 | 1.4 | 7.0 | 9.2 | 84.5% | No lithium precipitation |
| Example 21 | 1.5 | 7.5 | 11.0 | 84.3% | No lithium precipitation |
| Example 22 | 1.7 | 8.5 | 12.5 | 84.5% | No lithium precipitation |
| Example 23 | 1.9 | 9.5 | 13.2 | 84.4% | No lithium precipitation |
| Example 24 | 2.0 | 10.0 | 14.5 | 84.3% | No lithium precipitation |

It can be seen from Table 2 when $D_v50 \geq 5Y$ is satisfied, the discharge ratio is high at a temperature of 0°C in the foregoing examples, and the lithium-ion battery presents excellent low-temperature performance. This indicates that the mechanical strength of particles can be ensured when $D_v50 \geq 5Y$, thereby effectively improving the low-temperature performance of the battery. On a condition that $D_v50 \geq 5Y$ is satisfied, the particle size is obviously greater than the pore size. This can guarantee the strength of particles, allowing the active material to have certain mechanical strength while having porous structures. Anti-crack capability is improved to avoid particle cracking during cold pressing, ensuring the low-temperature performance of the battery.

Table 3 shows relevant performance parameters of the negative electrode materials obtained in Examples 25 to 28, as well as the performance of corresponding batteries. As shown in Table 3, the low-temperature charge and discharge performance of the battery is further improved based on Example 20. To ensure uniform pore distribution in the active material, a range is restricted for a distance L between two adjacent pores when a single particle has two or more pores. Furthermore, the maximum diameter Y of pores, an average value X of the maximum diameter of the pores in particles with pores, and a difference range of Y-X are restricted for a region (for example, the foregoing 80 $\mu$m$\times$100 $\mu$m region).

**Table 3**

| No. | Y-X ($\mu$m) | L ($\mu$m) | Discharge ratio at 0°C | Charging capability at 0°C at 0.3C |
|---|---|---|---|---|
| Example 20 | 1.2 | 8.5 | 84.5% | No lithium precipitation |
| Example 25 | 0.2 | 2.5 | 86.7% | No lithium precipitation |
| Example 26 | 0.5 | 4.0 | 86.3% | No lithium precipitation |
| Example 27 | 0.8 | 6.6 | 86.3% | No lithium precipitation |
| Example 28 | 1.0 | 8.0 | 85.8% | No lithium precipitation |

It can be seen from Table 3 that when Y-X$\leq$1.0 $\mu$m and L$\leq$8.0 $\mu$m, the discharge ratio at 0°C in Examples 25 to 28 is increased compared with that in Example 20. This is because when pores are evenly distributed in the active material and are consistent in size, the electrolyte infiltration of the negative electrode plate is significantly improved. This accelerates deintercalation of lithium ions from active particles and shortens the length of the deintercalating path, thereby improving the low-temperature discharge performance of the battery. Y represents the maximum diameter Y of the pores in a selected region (for example, the foregoing 80 $\mu$m$\times$100 $\mu$m region), and X represents the average value of the maximum diameter of particles with pores in this region. Y-X can be used to represent the consistency in pore size. A greater difference means lower consistency in pore size, which is unfavorable for uniform infiltration of electrolyte, affects the infiltration of electrolyte, and degrades the battery performance. Making Y-X$\leq$1.0 $\mu$m can ensure the consistency in pore size for the negative electrode material. When the distance L between two adjacent pores satisfies L$\leq$8.0 $\mu$m, uniform distribution of pores can be ensured. In this case, the pores are evenly distributed in particles of the active material, improving the infiltration of electrolyte and effectively improving the low-temperature performance of the battery. As a result, the low-temperature discharge ratio of the battery is significantly improved after pore size consistency and uniformity of pore distribution are restricted.

Table 4 shows relevant performance parameters of the negative electrode materials obtained in Examples 29 to 33, as well as the performance of corresponding batteries. As shown in Table 4, the low-temperature charge and discharge performance of the battery is further improved based on Example 26. To ensure relevant properties such as processability of the negative electrode material, the compacted density CD in a unit of g/cm$^3$, gram capacity Cap in a unit of mAh/g, a relationship between the gram capacity Cap in a unit of mAh/g and the compacted density CD in a unit of g/cm$^3$, and a relationship between $D_v$99 and $D_v$50 are restricted within appropriate ranges.

**Table 4**

| No. | CD (g/cm$^3$) | 3.5$D_V$50 ($\mu$m) | Dv99 ($\mu$m) | Cap (mAh /g) | 350-50$\times$ (1.85-C D) | Discharge ratio at 0°C | Charging capability at 0°C at 0.3C |
|---|---|---|---|---|---|---|---|
| Example 26 | 1.87 | 32.2 | 34.4 | 351.2 | 348.5 | 86.3% | No lithium precipitation |
| Example 29 | 1.78 | 28.4 | 26.0 | 341.0 | 344.0 | 87.6% | No lithium precipitation |
| Example 30 | 1.80 | 32.6 | 31.2 | 342.5 | 345.0 | 87.9% | No lithium precipitation |
| Example 31 | 1.82 | 40.6 | 38.5 | 344.3 | 346.0 | 88.0% | No lithium precipitation |
| Example 32 | 1.84 | 46.9 | 44.5 | 345.0 | 347.0 | 88.3% | No lithium precipitation |

(continued)

| No. | CD (g/cm³) | 3.5D$_V$50 (μm) | Dv99 (μm) | Cap (mAh/g) | 350-50× (1.85-C D) | Discharge ratio at 0°C | Charging capability at 0°C at 0.3C |
|---|---|---|---|---|---|---|---|
| Example 33 | 1.85 | 54.3 | 51.2 | 346.2 | 347.5 | 87.8% | No lithium precipitation |

It can be seen from Table 4 that the discharge ratio at 0°C in Examples 29 to 33 is increased compared with that in Example 26. This indicates that restricting the particle size, compaction, gram capacity, and relationship therebetween of the active material can ensure that the processability and electrical performance of the active material can be fully utilized, effectively improving the low-temperature performance of the battery. When the particle size distribution of the active material satisfies $D_V99 \leq 3.5 \times D_V50$, proper particle size and narrow particle distribution are guaranteed for the active material, so as to prevent electrode plate manufacturing from being affected by too many large particles. Furthermore, an excessively large particle size will increase the deintercalating path of lithium ions, degrading the kinetic performance of the material, while an excessively small particle size will affect electrode plate compaction and degrade the storage performance. When the active material has a gram capacity Cap in a unit of mAh/g where $Cap \geq 340$, the energy density of the battery can be ensured. In addition, it is restricted that the active material satisfies $Cap \leq 350-50 \times (1.90-CD)$. This can ensure a balance between the gram capacity and the compacted density, and allows the active material to have a high compacted density while with a high capacity, thereby achieving a higher battery energy density.

Table 5 shows relevant performance parameters of the negative electrode materials obtained in Examples 34 to 40, as well as the performance of corresponding batteries. As shown in Table 5, the low-temperature charge and discharge performance of the battery is further improved based on Example 32. To ensure electrochemical properties such as the kinetic performance and energy density of the material, a specific surface area BET and a degree of graphitization of the active material are restricted within appropriate ranges.

**Table 5**

| No. | G | BET (m²/g) | Discharge ratio at 0°C | Charging capability at 0°C at 0.3C |
|---|---|---|---|---|
| Example 32 | 95.8% | 3.2 | 88.3% | No lithium precipitation |
| Example 34 | 90.0% | 0.8 | 89.6% | No lithium precipitation |
| Example 35 | 90.8% | 1.3 | 89.9% | No lithium precipitation |
| Example 36 | 92.1% | 1.5 | 90.0% | No lithium precipitation |
| Example 37 | 93.5% | 1.9 | 89.5% | No lithium precipitation |
| Example 38 | 94.0% | 2.3 | 89.8% | No lithium precipitation |
| Example 39 | 95.2% | 2.7 | 89.6% | No lithium precipitation |
| Example 40 | 95.5% | 3.0 | 89.8% | No lithium precipitation |

It can be seen from Table 5 that the discharge ratio at 0°C in Examples 34 to 40 is superior to that in Example 32. This indicates that the battery performance can be improved to some extent when the degree of graphitization and the specific surface area fall within appropriate ranges. When the parameters are within the foregoing ranges, both the kinetic performance and energy density of the active material can be improved, ensuring the battery performance. The degree of graphitization is an important parameter affecting the gram capacity of graphite and is also a key parameter affecting the kinetic performance of the material. A low degree of graphitization features a large spacing between graphite layers, facilitating the rapid deintercalation of lithium ions and providing good kinetic performance. However, a low degree of graphitization results in low gram capacity of graphite and low compacted density, affecting the energy density of the battery. When the degree of graphitization is within an appropriate range, both the kinetic performance and energy density can be improved. The specific surface area of the active material affects the storage performance of the battery. When the specific surface area is larger, reaction between the active material and the electrolyte is more violent, and gas is easily produced during high-temperature storage, degrading the battery performance. It helps optimize the battery performance to make the degree of graphitization G of the active material satisfy $90\% \leq G \leq 95.5\%$ and make the specific surface area BET satisfy $BET \leq 3.0 m^2/g$.

Table 6 shows relevant performance parameters of the negative electrode materials obtained in Examples 41 to 46, as well as the performance of corresponding batteries. As shown in Table 6, the low-temperature charge and discharge performance of the battery is further improved based on Example 36. The low-temperature discharge performance of the battery can be improved by restricting the compacted density PD in a unit of g/cm$^3$ and the porosity $\Phi$ of the negative electrode within appropriate ranges.

**Table 6**

| No. | PD (g/cm$^3$) | $\Phi$ | Discharge ratio at 0°C | Charging capability at 0°C at 0.3C |
|---|---|---|---|---|
| Example 36 | 1.77 | 18% | 90.0% | No lithium precipitation |
| Example 41 | 1.46 | 20% | 91.3% | No lithium precipitation |
| Example 42 | 1.50 | 22% | 92.0% | No lithium precipitation |
| Example 43 | 1.55 | 24% | 92.2% | No lithium precipitation |
| Example 44 | 1.60 | 25% | 92.5% | No lithium precipitation |
| Example 45 | 1.68 | 28% | 92.0% | No lithium precipitation |
| Example 46 | 1.75 | 30% | 91.6% | No lithium precipitation |

It can be seen from Table 6 that the discharge ratio at 0°C in Examples 41 to 46 is superior to that in Example 36. This indicates that the battery performance can be improved to some extent when the compacted density and porosity of the negative electrode plate fall within appropriate ranges. An appropriate range for the compacted density can ensure the bonding force of the negative electrode plate, without cracking particles. A high porosity ensures the electrolyte infiltration of the negative electrode plate. This can effectively improve the low-temperature performance of the battery.

Specifically, when the compacted density PD in a unit of g/cm$^3$ of the negative electrode satisfies $1.45 \leq PD \leq 1.75$, the adhesion force of the negative electrode plate can be ensured and particles of the active material will not be cracked during cold pressing. If the compacted density of the electrode plate is excessively low, the adhesion force of the electrode plate is weak, and the active material tends to drop off from the negative electrode plate, degrading the battery performance. If the compacted density of the electrode is excessively high, the electrode plate is subject to great stress during cold pressing, and the active material tends to crack, degrading the battery performance. When the porosity $\Phi$ of the negative electrode satisfies $\Phi \geq 20\%$, the infiltration performance of the battery can be ensured. If the porosity of the negative electrode is excessively low, the electrolyte infiltration of the negative electrode is low, degrading the low-temperature performance of the battery.

Although illustrative embodiments have been demonstrated and described, persons skilled in the art should understand that the foregoing embodiments are not to be construed as limiting this application, and that some embodiments may be changed, replaced, and modified without departing from the principle, and scope of this application.

**Claims**

1. A negative electrode material, wherein the negative electrode material comprises a carbonaceous active material; and observed in a 80 $\mu$m$\times$100 $\mu$m region of an SEM image, the carbonaceous active material comprises carbonaceous particles with pores; wherein
the negative electrode material satisfies the following condition (A) or (B):

(A) a range of a maximum diameter Y of the pores in a single carbonaceous particle satisfies 0.3 $\mu$m$\leq$Y$\leq$2.0 $\mu$m, and an average value X of the maximum diameter of the pores in the carbonaceous particles satisfies 0.6 $\mu$m$\leq$X$\leq$1.5 $\mu$m; or
(B) a proportion of a quantity of the carbonaceous particles with a quantity of the pores N$\leq$2 in a total quantity of the carbonaceous particles in the region is $\leq$60%, and a proportion of a quantity of the carbonaceous particles with a quantity of the pores 3$\leq$N$\leq$5 in the total quantity of the carbonaceous particles in the region is $\leq$30%.

2. The negative electrode material according to claim 1, wherein a relationship between a median particle size D$_v$50 of the carbonaceous particle and Y satisfies D$_v$50$\geq$5Y, wherein a unit of D$_v$50 is $\mu$m.

3. The negative electrode material according to claim 1, wherein the pores satisfy at least one of condition (a) or (b):

(a) a relationship between the maximum diameter Y and the average value X of the maximum diameter of the pores satisfies Y-X≤1.0 $\mu$m; or

(b) in a single carbonaceous particle with pores, a distance L between two adjacent pores is L≤8.0 $\mu$m.

4. The negative electrode material according to claim 1, wherein the pores comprise at least one of a through hole or a blind hole.

5. The negative electrode material according to claim 1, wherein the carbonaceous active material satisfies at least one of conditions (c) to (e):

(c) the carbonaceous active material has a compacted density of CD in a unit of g/cm$^3$ after being pressed under a pressure of 5T, wherein CD≤1.85;

(d) the carbonaceous active material has a gram capacity of Cap in a unit of mAh/g, wherein Cap≥340, and a value of Cap and a compacted density CD in a unit of g/cm$^3$ after being pressed under a pressure of 5T of the carbonaceous active material satisfy Cap≤350-50×(1.90-CD); or

(e) a particle size distribution of the carbonaceous active material satisfies $D_v99 \leq 3.5 \times D_v50$, wherein a unit of $D_v99$ is $\mu$m.

6. The negative electrode material according to any one of claims 1 to 5, wherein the carbonaceous active material satisfies at least one of conditions (f) to (h):

(f) a degree of graphitization G of the carbonaceous active material is 90% to 95.5%;

(g) a specific surface area BET of the carbonaceous active material satisfies BET≤3.0 m$^2$/g; or

(h) the carbonaceous active material comprises at least one of artificial graphite, natural graphite, or meso-carbon microbeads.

7. An electrochemical apparatus, comprising a negative electrode, wherein the negative electrode comprises a negative electrode current collector and a negative electrode active material layer disposed on at least one surface of the negative electrode current collector, and the negative electrode active material layer comprises the negative electrode material according to any one of claims 1 to 6.

8. The electrochemical apparatus according to claim 7, wherein the negative electrode satisfies at least one of conditions (i) to (j):

(i) a compacted density PD in a unit of g/cm$^3$ of the negative electrode satisfies 1.45≤PD≤1.75; or

(j) a porosity $\Phi$ of the negative electrode satisfies $\Phi$≥20%.

9. The electrochemical apparatus according to claim 7, wherein a capacity retention rate is reduced by less than or equal to 20% after 500 cycles at 25°C.

10. An electronic device, comprising the electrochemical apparatus according to any one of claims 7 to 9.

Figure 1

## INTERNATIONAL SEARCH REPORT

| International application No. |
|---|
| **PCT/CN2021/104653** |

**A. CLASSIFICATION OF SUBJECT MATTER**

H01M 4/583(2010.01)i;  C01B 32/205(2017.01)i

According to International Patent Classification (IPC) or to both national classification and IPC

**B. FIELDS SEARCHED**

Minimum documentation searched (classification system followed by classification symbols)

H01M; C01B

Documentation searched other than minimum documentation to the extent that such documents are included in the fields searched

Electronic data base consulted during the international search (name of data base and, where practicable, search terms used)

CNTXT; WPABS; DWPI; CNKI, ISI Web of Science: 宁德新能源, 金文博, 董佳丽, 5h050/ca14, 5h050/ca15, 5h050/ca16, 5h050/ha06, 孔, 负极, 直径, nm, μm, pore?, range[300~2000 nm], diameter

**C. DOCUMENTS CONSIDERED TO BE RELEVANT**

| Category* | Citation of document, with indication, where appropriate, of the relevant passages | Relevant to claim No. |
|---|---|---|
| X | CN 112368864 A (LG CHEMICAL LTD.) 12 February 2021 (2021-02-12) description, paragraphs [0042]-[0053] and [0070]-[0077] | 1-10 |
| X | CN 107534148 A (JFE CHEMICAL CORP.) 02 January 2018 (2018-01-02) description, specific embodiments | 1-10 |
| A | CN 111278791 A (HERAEUS BATTERY TECHNOLOGY GMBH) 12 June 2020 (2020-06-12) entire document | 1-10 |
| A | CN 103328377 A (SHOWA DENKO K.K.) 25 September 2013 (2013-09-25) entire document | 1-10 |
| A | CN 112335080 A (NINGDE AMPEREX TECHNOLOGY LTD.) 05 February 2021 (2021-02-05) entire document | 1-10 |
| A | JP 2007039290 A (SUMITOMO METAL INDUSTRIES, LTD.) 15 February 2007 (2007-02-15) entire document | 1-10 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 November 2021** | **30 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/104653**

| Patent document cited in search report | | | Publication date (day/month/year) | Patent family member(s) | | | Publication date (day/month/year) |
|---|---|---|---|---|---|---|---|
| CN | 112368864 | A | 12 February 2021 | JP | 2021529417 | A | 28 October 2021 |
| | | | | KR | 20200089448 | A | 27 July 2020 |
| | | | | EP | 3799168 | A1 | 31 March 2021 |
| | | | | EP | 3799168 | A4 | 15 September 2021 |
| | | | | US | 2021122639 | A1 | 29 April 2021 |
| | | | | WO | 2020149688 | A1 | 23 July 2020 |
| CN | 107534148 | A | 02 January 2018 | JP | 2018163886 | A | 18 October 2018 |
| | | | | KR | 20170126493 | A | 17 November 2017 |
| | | | | KR | 101990723 | B1 | 18 June 2019 |
| | | | | JP | 2016225287 | A | 28 December 2016 |
| | | | | JP | 6412520 | B2 | 24 October 2018 |
| CN | 111278791 | A | 12 June 2020 | JP | 2021500290 | A | 07 January 2021 |
| | | | | JP | 2020200233 | A | 17 December 2020 |
| | | | | WO | 2019081735 | A1 | 02 May 2019 |
| | | | | WO | 2019081735 | A9 | 23 July 2020 |
| | | | | EP | 3476818 | A1 | 01 May 2019 |
| | | | | EP | 3700875 | A1 | 02 September 2020 |
| | | | | TW | 201932404 | A | 16 August 2019 |
| | | | | TW | I699332 | B | 21 July 2020 |
| | | | | KR | 20200074191 | A | 24 June 2020 |
| | | | | US | 2021179430 | A1 | 17 June 2021 |
| CN | 103328377 | A | 25 September 2013 | TW | 201332890 | A | 16 August 2013 |
| | | | | TW | I430945 | B | 21 March 2014 |
| | | | | CN | 105152166 | A | 16 December 2015 |
| | | | | JP | 5266428 | B1 | 21 August 2013 |
| | | | | JP | WO2013058349 | A1 | 02 April 2015 |
| | | | | DE | 112012004386 | T5 | 24 July 2014 |
| | | | | CN | 103328377 | B | 21 October 2015 |
| | | | | US | 2014335428 | A1 | 13 November 2014 |
| | | | | US | 9368796 | B2 | 14 June 2016 |
| | | | | KR | 20130086385 | A | 01 August 2013 |
| | | | | KR | 101347638 | B1 | 06 January 2014 |
| | | | | WO | 2013058349 | A1 | 25 April 2013 |
| | | | | JP | 2013155110 | A | 15 August 2013 |
| CN | 112335080 | A | 05 February 2021 | None | | | |
| JP | 2007039290 | A | 15 February 2007 | KR | 20080011237 | A | 31 January 2008 |
| | | | | CN | 1907848 | A | 07 February 2007 |
| | | | | CN | 1907848 | B | 10 November 2010 |
| | | | | JP | 4802595 | B2 | 26 October 2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110340794
- GB 245332009 T